# EUROPÄISCHE PATENTSCHRIFT

(11) **EP 0 758 741 B1**
(45) Veröffentlichungstag und Bekanntmachung des Hinweises auf die Patenterteilung: **02.02.2000**
(21) Anmeldenummer: 96110993.1
(22) Anmeldetag: 09.07.1996
(51) Int. Cl.: G01L 1/22, G01L 1/20, G01L 5/00

(54) **Foliendrucksensor**
Sheet pressure sensor
Palpeur de pression en feuille

(30) Priorität: 16.08.1995 DE 19530092
(43) Veröffentlichungstag der Anmeldung: 19.02.1997
(73) Patentinhaber: DaimlerChrysler AG, 70567 Stuttgart (DE); I.E.E. International Electronics & Engineering S.à.r.l., L-2632 Luxembourg (LU)
(72) Erfinder: Petri, Volker, 71134 Aidlingen (DE); Mickeler, Reinhold, 71155 Altdorf (DE); Meyer, Michael, 71063 Sindelfingen (DE); Serban, Bogdan, L-4405 Soleuvre (LU); Witte, Michel, L-8077 Bertrange (LU)

(56) Entgegenhaltungen:
- DE-A- 2 911 133
- GB-A- 2 222 258
- US-A- 5 010 774
- US-A- 5 357 108
- PATENT ABSTRACTS OF JAPAN vol. 014, no. 070 (E-0886), 8.Februar 1990 & JP 01 289178 A (NISSAN MOTOR CO LTD), 21.November 1989,
- PATENT ABSTRACTS OF JAPAN vol. 008, no. 084 (E-239), 18.April 1984 & JP 59 005669 A (HITACHI SEISAKUSHO KK), 12.Januar 1984,
- PATENT ABSTRACTS OF JAPAN vol. 014, no. 216 (E-0924), 8.Mai 1990 & JP 02 051245 A (OKI ELECTRIC IND CO LTD), 21.Februar 1990,
- PATENT ABSTRACTS OF JAPAN vol. 018, no. 266 (E-1551), 20.Mai 1994 & JP 06 045423 A (NEC KYUSHU LTD), 18.Februar 1994,

## Beschreibung

Die Erfindung betrifft einen überprüfbaren Foliendrucksensor mit den Merkmalen des Oberbegriffs des Patentanspruchs 1.

Ein solcher Foliendrucksensor ist aus der gattungsbildenden DE 42 37 072 C1 bekannt und in Fig. 3a als Leiterbahnschema dargestellt. Der Foliendrucksensor ist aus zwei zusammenlaminierten Trägerfolien aus thermoplastischem Kunststoff aufgebaut, von denen die erste mit einem Halbleiterpolymer und die zweite mit zwei benachbarten, jeweils an beiden Enden kontaktierbaren Leiterbahnen beschichtet ist. Innerhalb räumlich abgegrenzter, Sensorelemente bildende Bereiche weisen die Leiterbahnen berührungslos ineinander greifende Kammstrukturen auf. Wird das Sensorelement mit einer Normalkraft belastet, schaltet das Halbleitermaterial benachbart angeordnete Kontaktfinger der Kammstrukturen kraftabhängig mehr oder weniger parallel. Zwischen den beiden Leiterbahnen liegt damit ein elektrischer Widerstand an, der mit zunehmender Druckkraft abnimmt. Der aus der gattungsbildenden Schrift bekannte Foliendrucksensor ist für sicherheitsrelevante Anwendungen im Kraftfahrzeug, insbesondere zur Sitzbelegungserkennung konzipiert. Jede Unterbrechung einer Leiterbahn aufgrund einer mechanischen Beschädigung oder ein Kurzschluß zwischen den Leiterbahnen läßt sich mit einer einfachen Durchgangsprüfung erfassen. Eine Durchgangsprüfung mißt den elektrischen Widerstand der an beiden Enden kontaktierbaren Leiterbahnen. Die Durchgangsprüfung kann beispielsweise im Verlauf eines automatischen Prüfablaufes bei jedem Start des Fahrzeugs oder in festgelegten Zeitabständen erfolgen. Durch die besondere Ausbildung der die Kammstruktur bildenden Kontaktfinger als Leiterbahnschlingen sind die Kontaktfinger in die Prüfung voll einbezogen.

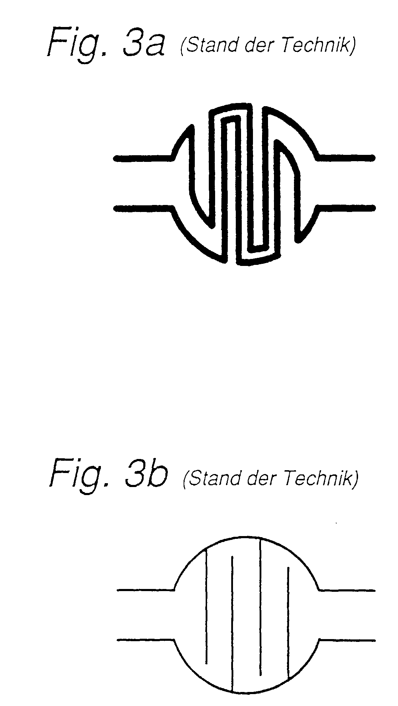

Der gattungsgemäße Foliendrucksensor in Fig. 3a stellt die Weiterbildung dar eines einfachen Foliendrucksensors, wie er in Fig. 3b dargestellt ist und beispielsweise aus der DE 30 44 384 A1 abgeleitet werden kann. Die Kammstruktur ist dabei durch senkrecht von einem Hauptstrang abzweigenden Stichleitungen realisiert.

Werden eine große Anzahl von Sensorelementen hintereinander geschaltet, so ergeben sich bei dem aus der gattungsbildenden Patentschrift bekannten Foliendrucksensor aufgrund der mäandrierenden verzweigungsfreien Ausbildung der Leiterbahnen eine große Gesamtlänge und damit große Leiterbahnwiderstände. Aus Gründen der Störsicherheit und elektromagnetischen Verträglichkeit (EMV) ist es jedoch erwünscht, das Gesamtsystem aller drucksensitiven Elemente niederohmig auszuführen, weshalb die Halbleiterpolymerlage niederohmig bemessen wird. Dann stellt sich jedoch das Problem, daß aufgrund sich überschneidender Widerstandsbereiche das Ergebnis einer Leitungsdurchgangsprüfung, bei der die Summe der beiden Leitungswiderstände gemessen wird, nicht unterscheidbar ist von einem Ergebnis, bei dem mehrere Drucksensoren mit Maximaldruck beaufschlagt sind. Eine Funktionsüberprüfung im belasteten Zustand ist damit nicht möglich.

Abhilfe kann geschaffen werden durch eine breitere Ausführung der Leiterbahnen und durch eine Reduzierung der Anzahl der Kontaktfinger pro Sensorelement. Dies hätte zur Folge, daß zum einen die Sensorelemente größer und zum anderen unempfindlicher würden. In diversen Anwendungsfällen ist eine Vergrößerung der Sensorflächen nicht erwünscht, wenn beispielsweise mechanische Vorspannungen und Torsionseinflüsse das Meßergebnis verfälschen können. Bei einer Anwendung des Foliendrucksensor zur Sitzbelegungserkennung kommt hinzu, daß eine Vielzahl von großflächigen Sensorelementen die Luftdurchlässigkeit des Sitzes verschlechtern würden.

Aufgabe der Erfindung ist es, einen Foliendrucksensor bereitzustellen, der niederohmig ausgelegt werden kann und bei vorgegebener Fläche eine möglichst hohe Empfindlichkeit bei gleichzeitiger überprüfbarkeit erlaubt.

Diese Aufgabe wird mit den Merkmalen des Anspruchs 1 gelöst. Demnach unterscheidet sich der erfindungsgemäße Foliendrucksensor von dem Foliendrucksensor aus der gattungsbildende Schrift dadurch, daß das Sensorelement neben den als Leiterbahnschlingen ausgebildeten Kontaktfingern auch solche aufweist, die als Stichleitungen ausgebildet sind.

Die Stichleitungen beanspruchen weniger Raum als die Leiterbahnschlingen, so daß bei gleicher Fläche die Empfindlichkeit gesteigert wird, wenn eine oder mehrere Leiterbahnschlingen durch Stichleitungen ersetzt werden. Gleichzeitig verringert sich durch die Einsparung an Leiterbahnschlingen der Leiterbahnwiderstand, so daß die gewünschte niederohmige Auslegung der Leiterbahnstruktur erreicht wird.

Eine für die Praxis ausreichende Überprüfbarkeit des Sensorelementes ist trotzdem gegeben. Wie sich zeigt, führt eine durch einen dünnen Riß verursachte Unterbrechung eines einzelnen Kontaktfinger in der Regel zu keiner wesentlichen Beeinträchtigung des Sensorelementes. Dies liegt daran, daß bei Druckbelastung ein dünner Riß in den meisten Fällen durch das Halbleitermaterial elektrisch überbrückt wird. Dünne, vereinzelt auftretende Risse sind also tolerierbar. Daher kann in Abkehr von der Lehre der gattungsbildenden Schrift von der Forderungen abgerückt werden, daß jeder einzelne Kontaktfinger überprüfbar sein muß.

Eine grobe Überprüfbarkeit des Sensorelementes ist aber unverzichtbar, und wird erfindungsgemäß mit wenigen als Leiterbahnschlingen ausgebildeten Kontaktfingern sichergestellt. Mit einer solchen Anordnung wird jeder größere Riß von der Ausdehnung des Sensorelementes und einer Dicke, die bei Druckbelastung nicht überbrückt wird, bei einer Durchgangsprüfung erkannt.

Besondere vorteilhafte Aus- und Weiterbildungen der Erfindung sind durch die Merkmale der Unteransprüchen gekennzeichnet. Mehrere Ausführungsbeispiele der Erfindung sind in der Zeichnung dargestellt und werden im folgenden näher beschrieben. Funktionell entsprechende Komponenten sind dabei mit gleichen Positionszeichen gekennzeichnet.

Es zeigen:
- Fig. 1: ein erstes Ausführungsbeispiel für einen erfindungsgemäßen Foliendrucksensor,
- Fig. 2: weitere Ausführungsbeispiele,
- Fig. 3: Leiterbahnstruktur bekannter Foliendrucksensoren,
- Fig. 4: Querschnitt durch einen Foliendrucksensor ohne und mit Druckbelastung.

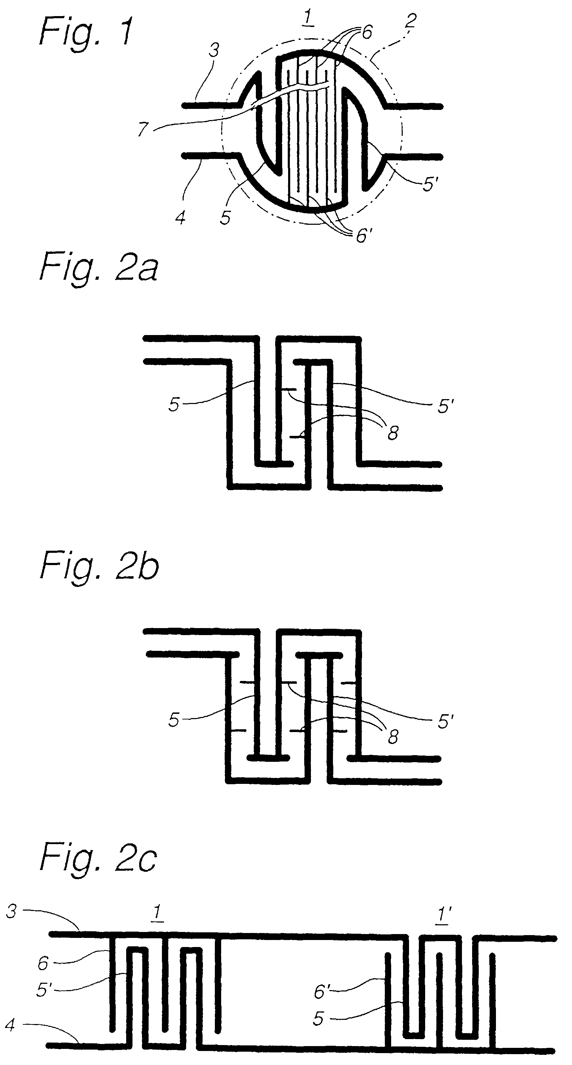

Der Foliendrucksensor in Fig. 1 besteht aus einem einzigen kreisförmigen Sensorelement 1. Innerhalb des drucksensitiven Bereiches, der durch die Kontur 2 begrenzt ist, geht jede der beiden Leiterbahnen 3, 4 über in eine aus mehreren Kontaktfingern aufgebaute kammartige Struktur. Die kammartigen Strukturen sind einander gegenüberliegend und zugewandt angeordnet und greifen berührungslos ineinander. Die Kontaktfinger werden gebildet durch verzweigungsfreie Leiterbahnschlingen 5, 5' einerseits und durch von den Leiterbahnen 3, 4 senkrecht abzweigenden Stichleitungen 6, 6' andererseits. Die Leiterbahnen 3, 4 sind vergleichsweise dick ausgeführt, um in Hinblick auf die Auswertbarkeit einer Durchgangsprüfung den gesamten Leitungswiderstand gering zu halten. Die Stichleitungen 6, 6' hingegen können vergleichsweise dünn ausgeführt sein, da sie an der Durchgangsprüfung nicht teilhaben. Eine dünne Ausführung hat zudem den Vorteil, daß die Empfindlichkeit des Sensorelementes gesteigert werden kann, indem mehr Stichleitungen 6, 6' auf gleicher Fläche untergebracht werden können, wie dies auch aus der Fig. 1 hervorgeht.

Mit der Position 7 ist in Fig.1 ein typischer Rißverlauf angedeutet, der sich über mehrere Kontaktfinger erstreckt. Da ein durch eine Leiterbahnschlinge 5 gebildeter Kontaktfinger miterfaßt ist, wird der Riß bei einer Durchgangsprüfung erkannt. Ein solcher Rißverlauf, bliebe bei einem Sensorelement nach dem Stand der Technik, Fig. 3b, bei dem die kammartige Strukturen allein durch Stichleitungen gebildet werden, unerkannt. Die Anordnung und Verteilung der Leiterbahnschlingen 5, 5' innerhalb des Sensorelementes 1 legt die Größe und Erstreckung der Risse fest, die im Wege einer Durchgangsprüfung erkannt werden. Ein ausreichend starker Riß kann nicht nur im unbelasteten Zustand sondern auch unter Druckbelastung zuverlässig erkannt werden. Ein dünner Riß hingegen würde bei Druckbelastung durch Halbleitermaterial überbrückt und wäre daher nur im unbelasteten Zustand zuverlässig erkennbar. Aus Durchgangsmessungen bei einerseits belastetem und andererseits unbelastetem Sensor sind daher Rückschlüsse auf die Dicke des Risses möglich. Bei einem Einsatz des erfindungsgemäßen Sensorelementes in einer Sensormatte zur Sitzbelegungserkennung für den Beifahrsitz würde ein dünner Riß im Sensorelement zuerst bei unbelegtem Sitz erkannt und mitgeteilt. Eine Beeinträchtigung der Belegungserkennung tritt jedoch erst später ein, da das Sensorelement unter Belastung aufgrund des erwähnten Überbrückungseffektes zunächst noch funktionsfähig ist. Der Fahrer des Fahrzeugs wird also rechtzeitig vor einer sich anbahnenden Funktionsunfähigkeit der Sitzbelegungserkennung gewarnt. Die Sitzbelegungserkennung ist erst dann gänzlich unbrauchbar, wenn auch bei belegtem Sitz die Durchgangsmessung eine Unterbrechung in einem Sensorelement erfaßt.

Eine vorteilhafte Ausführungsform sieht vor, wie in Fig. 1 dargestellt, die äußeren Kontaktfinger durch Leiterbahnschlingen zu bilden und den so begrenzten inneren Bereich mit als Stichleitungen ausgebildeten Kontaktfingern aufzufüllen. Mit dieser Anordnung werden Risse, die ihren Ursprung außerhalb des Sensorelementes haben und sich mit der Zeit ausdehnen, frühzeitig bei Erreichen des Sensorelementes erkannt.

Bei den in Fig. 2a und Fig. 2b gezeigten Sensorelementen spannen jeweils benachbarte, durch Leiterbahnschlingen 5, 5' gebildete Kontaktfinger verschiedener Leiterbahnen einen aktiven Raum auf, in den hinein Stichleitungen 8 ragen, die von den die Kontaktfinger bildende Leiterbahnschlingen 5, 5' abzweigen. Dadurch vergrößert sich die wirksame Oberfläche der Kontaktfinger und damit die Empfindlichkeit des Sensorelementes. Zu diesem Zweck können anstelle der Stichleitungen 8 andere geometrische Formen vorgesehen sein, beispielsweise kleine Dreiecke oder Halbkugeln, welche die Oberfläche der Leiterbahnschleife in den aktiven Raum hinein vergrößern.

Die Fig. 2c zeigt zwei hintereinander geschaltete Sensorelemente 1, 1', bei denen bezogen auf ein einzelnes Sensorelement 1 die eine Leiterbahn 3 eine erste, ausschließlich aus Stichleitungen 6 gebildete Kammstruktur und die andere Leiterbahn 4 eine zweite, ausschließlich aus Leiterbahnschlingen 5' gebildete Kammstruktur aufweist. Damit ist immer ein als Leiterbahnschlinge 5' ausgebildeter Kontaktfinger neben einem als Stichleitung 6 ausgebildeten Kontaktfinger der anderen Leiterbahn angeordnet.

Ein folgendes Sensorelement 1' weist die umgekehrte Anordnung auf, indem die erste bzw. zweite Kammstruktur nun von der jeweils anderen Leiterbahn gebildet werden. Im folgenden Sensorelement 1' weist also die eine Leiterbahn 3, deren Kammstruktur zuvor Stichleitungen 6 aufwies nun Leiterbahnschlingen 5 auf, während die Kammstruktur der andere Leiterbahn 4 nun Stichleitungen 6' aufweist. Durch diese Alternierung der Kammstrukturen wird der Durchgangswiderstand gleichmäßig auf die beiden Leiterbahnen 3, 4 verteilt, was bei der Auswertung der Durchgangsprüfung von Vorteil sein kann.

In Fig. 3a ist ein Sensorelement gezeigt, wie es aus der gattungsbildenden Schrift bekannt ist und welches eine volle Überprüfung der Kammstruktur erlaubt. In Fig. 3b ist ein Sensorelement gezeigt wie es ebenfalls aus dem Stand der Technik (DE 30 44 384 A1) bekannt ist und bei dem die ausschließlich als Stichleitungen ausgebildeten Kontaktfinger von einer Durchgangsprüfung nicht erfaßt werden.

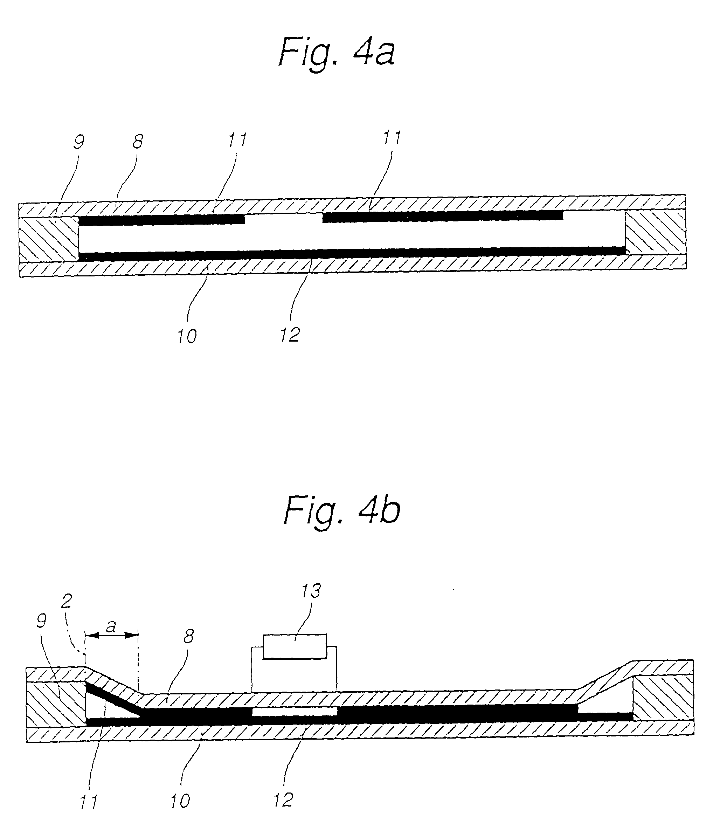

Abschließend wird anhand der Fig. 4a, 4b auf den bereits mehrfach erwähnten Überbrückungseffekt nochmals eingegangen. Die beiden Figuren zeigen im Querschnitt einen Foliendrucksensor bei dem eine Stichleitung 11 unterbrochen ist. In Fig. 4a ist das Sensorelement unbelastet dargestellt, in Fig. 4b dagegen belastet, deutlich erkennbar an der durchgebogenen oberen Trägerfolie 8. Die obere Trägerfolie 8 und die untere Trägerfolie 10 sind vermittels einer doppelseitig klebenden Klebefolie zusammenlaminiert. Im dem durch die Kontur 2, die auch in Fig. 1 dargestellt ist, begrenzten drucksensitiven Bereich ist die mittlere Klebefolie ausgespart und dient somit als Abstandhalter (Spacer) 9, der im unbelasteten Zustand die Leiterbahnen und Stichleitung 11 von der darunter liegenden Halbleiterpolymerschicht 12 trennt.

Bei dem mit Kraft beaufschlagten Sensorelement in Fig. 4b wird eine Unterbrechung in einer innerhalb des drucksensitiven Bereiches verlaufenden Leitung wie der Stichleitung 11 durch die Halbleiterpolymerschicht 12 mit deren spezifischem Widerstand kraftabhängig überbrückt. Diese Überbrückung ist durch den Widerstand 13 symbolisch dargestellt. Damit bleibt die unterbrochene Leitung weitgehend funktionsfähig, weil im belasteten Zustand ein fehlendes Leitungsstück durch den Widerstand ersetzt wird. Das Sensorelement ist um so weniger beeinträchtigt, je kürzer die Unterbrechung in der Leitung ist.

Einschränkend gilt jedoch, daß der dargestellte überbrückungseffekt in der Nähe des Abstandhalters 9 und damit der Kontur 2 nicht eintritt, wie aus Fig. 4b deutlich wird. Innerhalb eines Randbereiches a kann, bedingt durch den endlichen Durchbiegeradius, keine Kontaktierung der unterbrochenen Leitung mit der Halbleiterpolymerschicht erfolgen. Damit kommt es bei einer solchen Unterbrechung zu einem Totalausfall der betroffenen Stichleitung und zu einer empfindlichen Störung des Sensorelementes.

Es empfiehlt sich daher, die Aussparung in der zwischenliegenden Klebefolie so zu gestalten, daß die Kontur 2 der Aussparung die Kammstrukturen in einem solchen Abstand umschließt, daß die Leiterbahnabschnitte der Kontaktfinger bei Druckbelastung vollständig mit dem Halbleiterpolymer 12 in Berührung kommen.

Dies ist jedoch nicht immer möglich. Insbesondere bei vergleichsweise großflächigen Sensorelementen muß die Ausparung in der Klebefolie, welche die Kontur 2 bildet, möglichst klein sein, um ein Durchhängen der oberen Trägerfolie 8 zu vermeiden. Für diese Fälle ist die Verwendung eines erfindungsgemäßen Foliendrucksensors empfohlen, bei dem mittels der als Leiterbahnschleifen ausgebildete Kontaktfinger eine Unterbrechung im Randbereich a bei einer Durchgangsmessung erfaßt werden kann.

Bisher wurde der Überbrückungseffekt nur im Zusammenhang mit einer Leitungsunterbrechung erwähnt. Er tritt jedoch auch dann ein, wenn umgekehrt die Halbleiterpolymerschicht punktuell defekt während die Leiterbahn intakt ist. Für diesen Fall gelten die dargelegten Angaben und Erläuterungen entsprechend.

## Patentansprüche

1. Foliendrucksensor aufgebaut aus zwei zusammenlaminierten Trägerfolien aus thermoplastischem Kunststoff, wobei die erste Trägerfolie mit einem Halbleiterpolymer und die zweite Trägerfolie mit zwei benachbarten, jeweils an beiden Enden kontaktierbaren Leiterbahnen beschichtet ist, die innerhalb räumlich abgegrenzter, Sensorelemente bildende Bereiche berührungslos ineinander greifende Kammstrukturen aufweisen, **dadurch gekennzeichnet**, daß innerhalb eines Sensorelementes (1, 1') mindestens ein Kontaktfinger der beiden Kammstrukturen durch eine Leiterbahnschlinge (5, 5') und mindestens ein anderer Kontaktfinger durch eine von einer Leiterbahn abzweigenden Stichleitung (6, 6', 8) gebildet ist.

2. Foliendrucksensor nach Anspruch 1, **dadurch gekennzeichnet,** daß die äußeren Kontaktfinger eines Sensorelementes (1) durch Leiterbahnschlingen (5, 5') gebildet sind.

3. Foliendrucksensor nach Anspruch 1, **dadurch gekennzeichnet**, daß die Stichleitungen (8) von der Leiterbahnschlinge (5, 5') abzweigen.

4. Foliendrucksensor nach Anspruch 1, **dadurch gekennzeichnet**, daß jeweils ein als Leiterbahnschlinge (5, 5') ausgebildeter Kontaktfinger der einen Leiterbahn (3) neben einem als Stichleitung (6, 6') ausgebildeten Kontaktfinger der anderen Leiterbahn (4) angeordnet ist.

5. Foliendrucksensor nach einem der Ansprüche 1 bis 4, **dadurch gekennzeichnet,** daß die beiden Trägerfolien (8, 10) mittels einer zwischenliegenden Klebefolie zusammenlaminiert sind, welche im Bereich des Sensorelementes ausgespart ist, wobei die Kontur (2) der Aussparung die Kammstrukturen in einem solchen Abstand umschließt, daß die Leiterbahnabschnitte der Kontaktfinger (5, 5', 6, 6', 8) bei Druckbelastung vollständig mit dem Halbleiterpolymer (12) in Berührung kommen.

6. Foliendrucksensor nach einem der voranstehenden Ansprüche, **dadurch gekennzeichnet**, daß er bei einer sicherheitskritischen Anwendung wie zur Sitzbelegungserkennung in Kraftfahrzeugen eingesetzt ist.

## Claims

1. Foil-type pressure sensor formed of two carrier foils made of a thermoplastic material laminated together, the first carrier foil being coated with a semiconducting polymer and the second carrier foil having two conducting circuit paths close to one another, each path having two ends with which electrical contact can be made and comprising comb-like structures that intermesh without direct contact within spatially delimited areas forming sensor elements,
**characterised in that**
within one sensor element (1, 1') at least one contact finger of both comb structures is formed by conducting circuit path loops (5, 5') and at least one other contact finger is formed by a spur-line conductor (6, 6', 8) branching off from a conducting path.

2. Foil-type pressure sensor according to Claim 1,
**characterised in that**
the outer contact fingers of one sensor element (1) are formed by conducting circuit path loops (5, 5').

3. Foil-type pressure sensor according to Claim 1,
**characterised in that**
the spur-line conductors (8) branch off from the conducting circuit path loop (5, 5').

4. Foil-type pressure sensor according to Claim 1,
**characterised in that**
in each case one contact finger of a conducting circuit path (3) formed as a conducting path loop (5, 5') is positioned next to a contact finger of the other conducting path (4) formed as a spur-line conductor (6, 6').

5. Foil-type pressure sensor according to Claim 1,
**characterised in that**
the two carrier foils (8, 10) are laminated together by means of an adhesive foil between them, which is cut out in the area of the sensor element such that the contour (2) of the cut-out encloses the comb structures at a distance such that the conducting path sections of the contact fingers (5, 5', 6, 6', 8) come completely in contact with the semiconducting polymer (12) under the action of pressure.

6. Foil-type pressure sensor according to any of the preceding claims,
**characterised in that**
it is used for a safety-critical application such as the detection of seat occupancy in motor vehicles.

## Revendications

1. Palpeur de pression en feuille constitué de deux feuilles supports laminées ensemble, en matière thermoplastique, où la première feuille support est recouverte par un polymère semi-conducteur et où la seconde feuille support est recouverte par deux circuits conducteurs contigus pouvant faire contact à chaque fois au niveau des deux extrémités, lesquels circuits conducteurs, à l'intérieur de zones physiquement délimitées formant des éléments du palpeur, présentent des structures en forme de peigne s'interpénétrant l'une l'autre sans être en contact,
caractérisé en ce que, à l'intérieur d'un élément du palpeur (1, 1'), au moins un doigt de contact des deux structures en forme de peigne est formé par une boucle (5, 5') des circuits conducteurs et en ce que au moins un autre doigt de contact est formé par un câble de dérivation (6, 6', 8) connecté à partir d'un circuit conducteur.

2. Palpeur de pression en feuille selon la revendication 1, caractérisé en ce que les doigts de contact extérieurs d'un élément (1) du palpeur sont formés par des boucles (5, 5') des circuits conducteurs.

3. Palpeur de pression en feuille selon la revendication 1, caractérisé en ce que les câbles de dérivation (8) sont connectés à partir de la boucle (5, 5') des circuits conducteurs.

4. Palpeur de pression en feuille selon la revendication 1, caractérisé en ce que, à chaque fois, un doigt de contact de l'un des circuits conducteurs (3), configuré comme une boucle (5, 5') des circuits conducteurs, est placé à côté d'un doigt de contact de l'autre circuit conducteur (4), configuré comme un câble de dérivation (6, 6').

5. Palpeur de pression en feuille selon l'une quelconque des revendications 1 à 4, caractérisé en ce que les deux feuilles supports (8, 10) sont laminées ensemble au moyen d'une feuille adhésive intermédiaire, laquelle feuille adhésive est évidée dans la zone de l'élément du palpeur où le contour (2) de l'évidement entoure les structures en forme de peigne suivant un intervalle tel que les segments des circuits conducteurs des doigts de contact (5, 5', 6, 6', 8), lors de la charge de pression, viennent complètement en contact avec le polymère semi-conducteur (12).

6. Palpeur de pression en feuille selon l'une quelconque des revendications précédentes, caractérisé en ce que le palpeur de pression est utilisé dans les véhicules lors d'une situation critique pour la sécurité, comme par exemple pour la reconnaissance d'occupation d'un siège.
